# EUROPEAN PATENT APPLICATION

(11) **EP 4 496 236 A1**
(43) Date of publication of application: **22.01.2025**
(21) Application number: 23186220.2
(22) Date of filing: 18.07.2023
(51) Int. Cl.: H04B 7/08, H01Q 3/26, H01Q 23/00, H04B 1/16

(54) **DIGITAL BEAMFORMER AND A METHOD FOR DIGITAL BEAMFORMING**

(71) Applicant: HENSOLDT Sensors GmbH, 82024 Taufkirchen (DE)
(72) Inventor: ROSSI, Gilberto, 89250 Senden (DE); RAUSCHER, Jürgen, 89198 Westerstetten (DE)
(74) Representative: LifeTech IP Spies & Behrndt Patentanwälte PartG mbB

(57) **Abstract**

A digital beamformer for a phased array is disclosed. The phased array includes a first set of antenna elements (51) and a second set of antenna elements (52). The beamformer comprises: a first frontend device (110), a second frontend device (120), and a backend device (200). The first frontend device (110) includes a first buffer memory (112) and a first local beamformer (114), wherein the first buffer memory (112) is configured to store first input signals (116) from the first set of antenna elements (51) at predetermined times at associated memory addresses (118). The second frontend device (120) includes a second buffer memory (122) and a second local beamformer (124), wherein the second buffer memory (122) is configured to store second input signals (126) from the second set of antenna elements (52) at the predetermined times at associated memory addresses (128). The backend device (200) is configured to fetch a snapshot (250) of the first input signals (116) and the second input signals (126) and based on the snapshot (250) to compute beamforming coefficients (205) for the adaptive digital beamforming. The first local beamformer (114) is configured to retrieve the first input signals (116) from the first buffer memory (112) and to perform, based on the computed beamforming coefficients (205), a first beamforming operation on the retrieved first input signals (116). The second local beamformer (124) is configured to retrieve the second input signals (126) from the second buffer memory (122) and to perform, based on the computed beamforming coefficients (205), a second beamforming operation on the retrieved second input signals (126)

## Description

The present invention relates to a digital beamformer for a phased array radar and to a method for digital beamforming and, in particular, to a distributed, systolic beamforming in a fully digital phased array with support of adaptive beamforming algorithms.

### BACKGROUND

There is a demand for digital phased array radar systems to provide a real time multi-beam digital beamforming including the calculation of beamforming coefficients and to steer radar beams accordingly. In addition, with the introduction of digital beamforming each antenna element has its own dedicated RF chain and individual analog-to-digital and digital-to-analog converters which produce a significant amount of data which needs to be processed in real time. However, the bandwidth of state-of-the art data networks is not sufficient to transfer the data generated by even a fraction of the antenna elements to a processing node. These limitations are particularly pertinent for an adaptive beamforming that is able to filter in real time multiple interference sources such as jammers or other transmitters.

Therefore, there is a demand for further improvements for digital beamformers that overcome at least some of the mentioned deficiencies of conventional systems.

### SUMMARY OF THE INVENTION

At least some of the above-mentioned problems are solved by a digital beamformer according to claim 1 and a corresponding method according to claim 12. The dependent claims refer to further advantageous realizations for the subject matters of the independent claims.

The present invention relates to a digital beamformer for a phased array, wherein the phased array includes a first set of antenna elements and a second set of antenna elements. The beamformer comprises a first frontend device, a second frontend device, and a backend device. The first frontend device includes a first buffer memory and a first local beamformer. The first buffer memory is configured to store first input signals (e.g. digital raw data) from the first set of antenna elements at predetermined times at associated memory addresses. The second frontend device includes a second buffer memory and a second local beamformer. The second buffer memory is configured to store second input signals from the second set of antenna elements at the predetermined times at associated memory addresses (e.g. for synchronization). The backend device is configured to fetch a snapshot of the first input signals and the second input signals and based on the snapshot to compute beamforming coefficients for the adaptive digital beamforming. The first local beamformer is configured to retrieve the first input signals from the first buffer memory and to perform, based on the computed beamforming coefficients, a first beamforming operation on the retrieved first input signals. The second local beamformer is configured to retrieve the second input signals from the second buffer memory and to perform, based on the computed beamforming coefficients, a second beamforming operation on the retrieved second input signals.

The phased array may be part of a radar system or of an electronic warfare (EW) system or a communication system (e.g. for mobile communication).

Optionally, the snapshot includes a predetermined number of samples of the first input signals and of the second input signals written in respective predetermined memory portions of the first buffer memory and of the second buffer memory.

Optionally, the backend device is configured to provide a data packet to the first frontend device. The data packet may include a memory offset indicating one of the predetermined times. The first local beamformer may be configured to start performing the beamforming operation after the data packet has been received. The beamforming operation generates one or more beams to be utilized by the phased array system, wherein the beamforming coefficients influence the reception pattern of the digital phased array in order to achieve beam steering as well as interference suppression. Thus, the beamforming coefficients encode information suitable to filter one or more interferers. E.g., an interfering signal (from a jammer or any other transmitter of electromagnetic radiation) may be received from a particular location or direction. Then, the beamforming coefficients may include information needed to filter those interfering signals (e.g. from a particular angular direction).

According to embodiments, the beamforming coefficients can be calculated on the current data (e.g. in real time). This means that the beamforming coefficients may be calculated for the current burst. This ensures that the interference signals to be suppressed are still relevant for the current measurement. For this purpose, a small number of samples (e.g. some kBytes) are first transmitted as the snapshot to the backend device. Whereas the entire samples (in the range GBytes) of the burst are held back in the buffer memories until the beamforming coefficients are calculated and transferred to all frontend devices. Then, the beamforming operation is initiated by issuing/transmitting the data packet to frontend devices. The data packet thus triggers the beamforming operation, i.e. the frontend devices may start the beamforming operation upon reception of the data packet.

This setup is especially of advantage for platforms that are moving fast and/or in the presence of fast-moving interferers.

The predetermined times at which the input signals are stored do not need to be an absolute time. For example, the frontend devices may be configured to store samples of raw sensor data with a predetermined rate into the buffer memories. For such a setup, by selecting a certain memory position it becomes possible to go back in time for a certain period in time. Thus, all frontend devices can be synchronized by setting a common memory position or a common memory offset to be applied by all frontend devices.

However, there is no need to generate the data packet by the backend device. Optionally, the first frontend device is configured to generate the data packet (or subsequent data packets) including a memory offset indicating one of the predetermined times. In addition, the first frontend device may add results of the first beamforming operation to the data packet and may provide the data packet to the second frontend device. Then, the second local beamformer may be configured to start performing the second beamforming operation after reception of the data packet.

Optionally, the first frontend device includes a first adder configured to add the results of the first beamforming operation to the data packet and, thereafter, to provide the data packet to the second frontend device. The second frontend device may include a second adder configured to add results of the second beamforming operation to the provided data packet and to provide the data packet to the backend device thereby finalizing the beamforming.

Optionally, the data packet includes a header with the memory offset. Otherwise, the data packet may be filled with predetermined digital values (e.g. zeros).

Optionally, the backend device is configured to provide the beamforming coefficients as part of the data packet. Additionally or alternatively, the backend device may send the beamforming coefficients directly to the first frontend device and/or to the second frontend device or to a storage device for downloading by the first frontend device and/or the second frontend device.

Optionally, the first buffer memory and the second buffer memory are circular memory buffers and each may include or couple to a respective address generator. Furthermore, the first frontend device and/or the second frontend device may include a respective write memory module (e.g. a DMA component) configured to write the first and second input signals at predetermined addresses provided by the respective address generator.

Optionally, the beamformer may include not only two frontend devices but a plurality of frontend devices. A (data) network may connect the plurality of frontend devices and the backend device with each other. The first frontend device and the second frontend device can be any two frontend devices included in the plurality of frontend devices. Therefore, it is understood that the present invention shall not necessarily be limited onto only two frontends.

Furthermore, all frontend devices may operate in the same way and may be interchangeable. For example, the first frontend device and the second frontend device may operate in an equal manner implemented by a same software installed on the first frontend device and on the second frontend device.

Optionally, the backend device and the plurality of frontend devices are connected as a daisy chain by a serial data connection. Each frontend device of the plurality of frontend devices may be configured to forward successively, after adding respective results of the beamforming operation, the data packet along the daisy chain and finally to the backend device.

Optionally, the backend device is configured to fetch another snapshot of input signals (e.g. the first input signals and the second input signals). Based on the other snapshot, the backend device may compute further beamforming coefficients (or deviations when compared to the previous beamforming coefficients). This can be performed while the first local beamformer and/or the second local beamformer (still) perform respective beamforming operations. Accordingly, another data packet may be transmitted to the frontend devices including another memory offset corresponding to the time of the snapshot. Therefore, the backend device may generate consecutive data packets based on consecutive snapshots associated with an ascending order in time. Thus, a moving interferer can be taken into account in real time - even if the interferer moves fast.

Embodiments relate also to a method for digital beamforming for a phased array, wherein the phased array including a first set of antenna elements and a second set of antenna elements. The method includes:
- storing, in a first buffer memory of first frontend device, first input signals from the first set of antenna elements at predetermined times at associated memory addresses;
- storing, in a second buffer memory of a second frontend device, second input signals from the second set of antenna elements at the predetermined times at associated memory addresses;
- fetching, by a backend device, a snapshot of the first input signals and the second input signals;
- computing, based on the snapshot, beamforming coefficients for the adaptive digital beamforming;
- retrieving, by the first local beamformer, the first input signals from the first buffer memory;
- performing, based on the computed beamforming coefficients, a first beamforming operation on the retrieved first input signals;
- retrieving, by the second local beamformer, the second input signals from the second buffer memory; and
- performing, based on the computed beamforming coefficients, a second beamforming operation on the retrieved second input signals.

The method may further include the following steps:
- transmitting the beamformed data of the first frontend device to the second frontend device, also serving as a trigger for the second frontend device; and/or
- transmitting the sum of the beamformed data of the second frontend device and the data received by the second frontend device to the backend.

Again, the beamforming operation(s) may again include an applying of the beamforming coefficients as filter. The order of method steps may again be different, at least as long as the defined functions can be achieved. This method may be carried out by a beamformer as defined before.

Moreover, this method may also be implemented in software or as a computer program product. Thus, the present invention relates also to a computer program product or a computer readable storage device having a program code stored thereon for performing the above-mentioned method when the computer program is executed on a computer or processor or the beamformer as defined before. In addition, all functions described previously in conjunction with the beamformer can be realized as further method steps and be implemented in software or software modules.

Advantages aspects of embodiments can be summarized as follows:
Embodiments provide a scalable, efficient solution for large digital phased arrays in terms of size, weight, power and cost by daisy-chaining digital frontends with a highspeed communication interface to collect the beamformed data. Embodiments provide further an efficient buffering of each digital frontend device and a low latency for data traversing the chain. Embodiments achieve this by calculating adaptive beamforming coefficients based on a snapshot of every antenna element. Since a streaming of all raw data would inevitably overload the communication interface, the hardware realization according to embodiments uses a buffering of the raw data and distributed computing of the beamforming in the frontend devices, thereby limiting the bandwidth of the communication interface and enabling the use of burst-wise adaptive beamforming algorithms in large systolic digital arrays.

Embodiments may achieve the efficient buffering in that each digital frontend buffers only the optionally preprocessed data of its channels in a local memory. The local memory may be written in a circular fashion (e.g. by circular buffers). All frontend devices can keep, according to embodiments, a synchronized time stamp and sample count by implying writing samples for a certain time to a certain memory address. For example, according to embodiments, all frontend devices may select a certain circular position in the exemplary circular buffer and thus process data associated with the same time.

Embodiments utilize as initiator for starting the beamforming process a data packet sent to the first frontend device. The data packet may include the memory offset but may otherwise be filled with zeros or another predetermined digital value. Each frontend device receives the data packet (e.g. propagates along the daisy chain) and, in response thereto, retrieves its raw samples (raw data) from the memory position indicated, e.g., in the header of the data packet (e.g. given by the memory offset). The raw samples are then beamformed at each frontend device and the result is added as beam data to the data packet.

According to embodiments, the new beam data as well as the memory position are then sent to the next frontend device, or in the case of the last frontend device, to the backend device. For adaptive beamforming, the backend device takes the snapshot of the single radiating elements (antenna elements) and computes the beamforming coefficients which then act as the initiator. According to further embodiments, in case of non-adaptive beamforming, the first frontend device may be the initiator of the beamforming operation.

The communication interface allows side channels (e.g. command & Control), and each frontend device may be addressed by the backend device. The side channels may be utilized to set up the daisy chain of all frontend devices. Embodiments also reduce the impact of packet losses on the interface between the frontend devices. For example, embodiments use a switched communication interface for the processing chain. This allows to form the arrangement of frontend devices with a minimum amount of cabling. This allows to operate the digital phased array independent of the number of employed frontend devices with a single highspeed link.

### BRIEF DESCRIPTION OF THE DRAWINGS

Various embodiments of the present invention will be described in the following by way of examples only, and with respect to the accompanying drawings, in which:
- Fig. 1: depicts a digital beamformer for a phased array radar according to an embodiment of the present invention.
- Fig. 2: depicts an exemplary embodiment with five frontend devices connected with a network.
- Fig. 3: depicts further details of an embodiment for one of the frontend devices.
- Fig. 4: shows a schematic flow chart for a method for beamforming according to further embodiments.

### DETAILED DESCRIPTION

Various examples will now be described more fully with reference to the accompanying drawings in which some examples are illustrated.

Accordingly, while examples are capable of various modifications and alternative forms, the illustrative examples in the figures will herein be described in detail. It should be understood, however, that there is no intent to limit examples to the particular forms disclosed, but on the contrary, examples are to cover all modifications, equivalents, and alternatives falling within the scope of the disclosure. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing illustrative examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

The term "module" shall name an entity that provides one or more functions or serves a certain purpose. It can be implemented in hardware or in software. When formed as hardware, it may be formed monolithically as one integrated component or may comprise several components, which may be distributed.

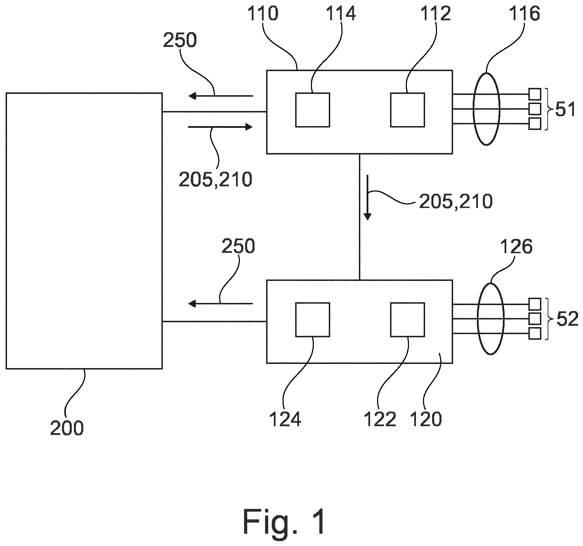

**Fig. 1** depicts a digital beamformer for a phased array radar. The phased array radar includes (at least) a first set of antenna elements 51 and a second set of antenna elements 52. The beamformer comprises (at least) a first frontend device 110, a second frontend device 120, and a backend device 200. The first frontend device 110 includes a first buffer memory 112 and a first local beamformer 114. The first buffer memory 112 is configured to store first input signals 116 from the first set of antenna elements 51 at predetermined times at associated memory addresses. The second frontend device 120 includes a second buffer memory 122 and a second local beamformer 124. The second buffer memory 122 is configured to store second input signals 126 from the second set of antenna elements 52 at the predetermined times at the associated memory addresses. The backend device 200 is configured to fetch a snapshot 250 of the first input signals 116 and the second input signals 126 and based on the fetched snapshot 250 to compute beamforming coefficients 205 for the adaptive digital beamforming. These beamforming coefficients 205 may then be provided to all frontend devices 110, 120.

The first local beamformer 114 is configured to retrieve the first input signals 116 from the first buffer memory 112 and to perform, based on the computed beamforming coefficients 205, a first beamforming operation on the retrieved first input signals 116. Similarly, the second local beamformer 124 is configured to retrieve the second input signals 126 from the second buffer memory 122 and to perform, based on the computed beamforming coefficients 205, a second beamforming operation on the retrieved second input signals 126.

The first input signals 116 and the second input signals 126 can be raw sensor data received from the respective antenna elements 51, 52, e.g. after conversion into digital data. The first buffer memory 112 and the second buffer memory 122 may be circular buffer memories so that a particular position of the circular buffer memory 112, 122 corresponds to input signals associated with a certain moment in time. Therefore, when reading sensor data 116, 126 from the buffer memories 112, 122 at a particular position ensures that the input signals correspond to the same time. This ensures a synchronization of the first frontend device 110 with the second frontend device 120 (and possibly more frontend devices).

According to embodiments, the exemplary circular buffers 110, 120 may have a predetermined size and may be written continuously with a predetermined sample rate. Newly captured samples will overwrite old samples with a certain periodicity. Hence, the overall amount of data written in the circular buffers 110, 120 defines a time range of previously captured samples. In this setup, the current position of writing is not important. By providing a predetermined memory offset, the read pointer of the circular buffer 110, 120 moves back in time (when starting from the current write pointer) by an amount defined by the given memory offset. If the same offset is provided to all frontends 110, 120, the synchronization is ensured because all frontends process samples associated to the same previous moment in time.

According to embodiments, the beamforming coefficients 205 may be calculated on the current data or current input signals 116, 126 implying that the beamforming coefficients 205 are calculated for a current burst. This ensures that interference signals to be suppressed are still relevant for the current radar measurement. For this purpose, a small number of samples are transmitted as the snapshot(s) 250 to the backend device 200, wherein the small number of samples are for example data of less than 1 Mbyte or a couple of Kbytes. Therefore, the snapshot 250 may correspond to a small subset of samples (or a predetermined number of samples) which advantageously is small enough to limit the amount of data provided to the backend device 200 but which is large enough to enable an adaptive beamforming by detecting signal interferences from other radar transmitters or jamming signals to provide a filtering for those interferences.

On the other hand, the entire samples of the current burst are stored in the buffer memories 112, 122 and may include data in the amount of Gigabytes and they are stored until the beamforming coefficients 205 are calculated. Therefore, the buffer memories 112, 122 may have a storage size large enough to store the raw sensor data 116, 126 corresponding to a time range for the calculation of the beamforming coefficients in the backend device 200. The concrete size will depend on the concrete setup (e.g. size and sampling rate of phased array radar). The first and second beamforming operations are then performed locally in the respective frontend devices 110, 120 based on the beamforming coefficients 205 that act as a filter so that the exemplary interfering signals are filtered out.

Therefore, according to embodiments, the backend device 200 calculates the beamforming coefficients 205 and programs them accordingly. The actual beamforming is then initiated with a data packet 210 which may be generated by the backend device 200 and transmitted subsequently to the first and second frontend devices 110, 120. The data packet 210 may include the memory offset indicating one of the predetermined times and will trigger the beamforming operation in the first local beamformer 114 upon receipt of the data packet 210. The beamformer according to embodiments is thus capable of generating adaptive coefficients for the ongoing burst and particularly suitable for fast moving systems (e.g. a radar system installed on an airplane) and/or fast-moving interferer.

The embodiment described so far included only two frontend devices 110, 120. However, the present invention shall not be limited on this simplified situation. According to further embodiments, the beamformer includes a plurality of frontend devices and a network connecting the plurality of frontend devices with each other and with the backend device 200. The above-described first frontend device 110 and the second frontend device 120 can be any two frontend devices of the plurality of frontend devices. The network may connect the backend device 200 and the plurality of frontend devices in the form of a daisy chain so that the data packet 210 generated by the backend device 200 can be sent to the first frontend device and thereafter to all following frontend devices in serial connection.

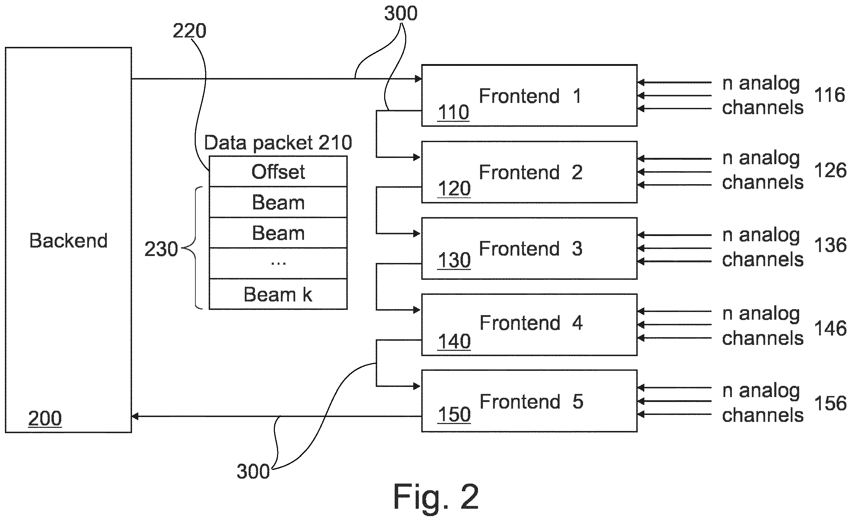

**Fig. 2** depicts an exemplary embodiment with five frontend devices 110, 120, 130, 140, 150 and the backend device 200 which are connected by a network 300.

In this embodiment, the first frontend device 110 is configured to receive first input signals 116, the second frontend device 120 is configured to receive second input signals 126, the third frontend device 130 is configured to receive third input signals 136, the fourth frontend device 140 is configured to receive fourth input signals 146, and the fifth frontend device 150 is configured to receive fifth input signals 156. Each of the input signals 116, 126, ..., 156 may include "n" analog channels, where the number n can be any integer value. These n analog channels are connected with respective antenna elements so that each frontend device 110, 120, ... is configured to process a subset of all antenna elements arranged as the radar array. For example, the first frontend device 110 may be configured to process a first line or row of antenna elements or a first portion of the antenna elements, the second frontend device 120 may be configured to process the second line or row of the antenna elements or a second portion and so on.

According to this embodiment, the backend device 200 is again configured to provide a data packet 210. The data packet 210 includes the memory offset 220 indicating a memory position in the buffer memories 112, 122. As set out above this offset 220 may indicate a particular moment in time (associated with certain samples) for which the beamforming shall be processed. The data packet 210 further includes a storage portion 230 to store processed beam data including, e.g, a beam 1, a beam 2, up to a beam k.

The backend 200 may generate this data packet 210 only with the offset 220 and otherwise filled with zeros. The data packet 210 may then be transmitted to the first frontend device 110. The first frontend 210, when it receives the data packet 210, will start processing the stored input signals 116 associated with the memory position indicated by the offset 220. When the first frontend 110 has processed the beamforming, the result is added to the data packet 210 and may be forwarded as modified data packet 210 to the second frontend device 120. When the second frontend device 120 receives the (modified) data packet 210 from the first frontend device 110 it likewise starts processing the beamforming and will again add the result to the data packet 210. Then, the (modified) data packet 210 is forwarded to the third frontend device 130, where the beamforming process is again initiated upon receiving the data packet 210. Again, the samples to be processed are determined by the memory position indicated by the offset 220 in the data packet 210. This process continues up to the last, for example the fifth frontend 150, which also starts performing the beamforming operation and will add its results to the data packet 210 which thereafter is sent back to the backend device 200.

The data packet 210 therefore will include as data load 230 data associated with the exemplary "k" beams (k can be any integer) generated by the plurality of frontend devices 110, 120, ..., 150. It is understood that the beamforming operation can also be carried out the other way around, i.e. the backend device 200 may send the data packet 210 first the last frontend device 150 which is then forwarded subsequently to the upper frontend devices 120, 130, ... until the first frontend device 110 which returns the final result to the backend device 200.

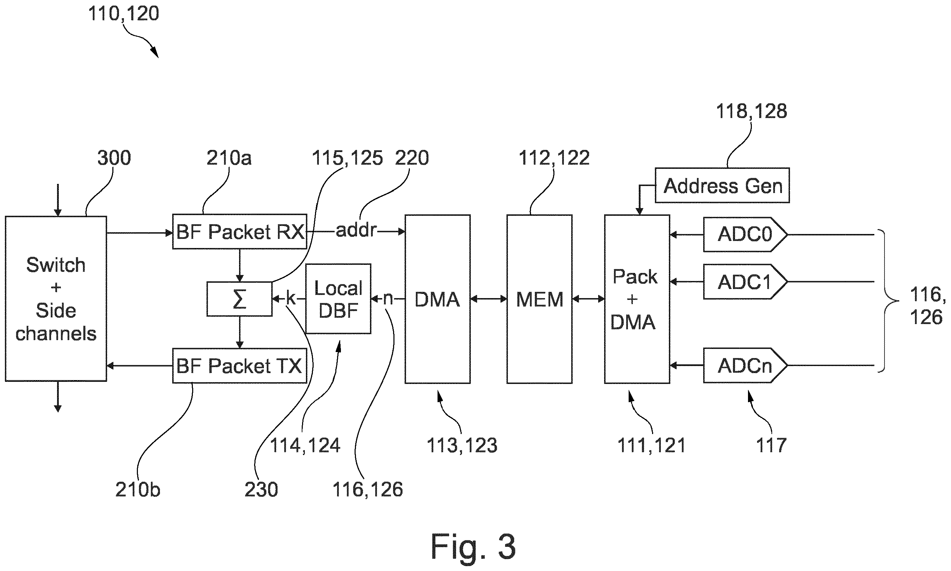

**Fig. 3** depicts an exemplary embodiment for one of the frontend devices 110, 120, ... illustrated in Fig. 2. The exemplary frontend device 110, 120 is connected to the network 300. The depicted frontend device 110, 120 receives the data packet 210 at a receive module 201a and provides the new data packet at transmit module 210b to the network 300 for forwarding to the next frontend device. The depicted frontend device 110, 120 is further connected to the antenna elements via the input channels for input signals 116, 126, which may provide "n" analog antenna signals to respective analog-digital converters 117.

The analog-digital converters 117 convert the analog antenna signals into digital signals and provide the digital signals to a packaging and write memory module 111, 121 (e.g. a direct memory access, DMA). The analog-digital converters 117 may comprehend simple preprocessing steps, like digital down conversion and decimation. The packaging and write memory module 111, 121 may be connected to a memory address generator 118, 128 that generates the memory address, where the digital data will be stored. The packaging and write memory module 111, 121 then stores the (digital) input signals 116, 126 in the buffer memory 112, 122 at the memory address generated by the address generators 118, 128. As set out before, this memory address is associated with a particular time or sample period so that the memory position, where the (digital) input signals 116, 126 are stored in the buffer memories 112, 122 are associated with a particular moment in time.

The buffer memories 112, 122 are further coupled to a reading module 113, 123 (e.g. a DMA) which is able to read the memory content from the buffer memory 112, 122 and provides the read input signals 116, 126 to the local digital beamformer 114, 124. The input signals 116, 126 are read from an address 220 included in the data packet 210 provided by the data packet receive module 210a. The address 220 may be given as a memory offset to identify a position in the exemplary circular buffer memory 112, 122. As set out before, this position corresponds to the predetermined time of sampling. The memory address 220 may be included in the header of data packet 210.

The local digital beamformer 114, 124 will then perform the beamforming operation based on the n input signal 116, 126 and on the beamforming coefficients 205 provided by the backend device 200. The result of the beamforming are k beams 230 that are provided to an adder 115, 125. The adder 115, 125 is configured to add the generated beams 230 to the received data packet 210 and to provide the modified data packet 210 via the network 300 to the next digital frontend device.

The buffer memory 112, 122 can be a circular buffer memory and can be implemented by a local memory such as DDR4. The address generation module 118, 128 is configured to count the samples such that the address is associated with a particular sample time.

The beamforming coefficients 205 are computed by the backend device 200 and may then be uploaded using additional packets different from the data packet 210. These packets are addressed to each single frontend device 110, 120, as each frontend device 110, 120 may need different coefficients. For each of the k beams, n complex numbers (one for each channel) are transferred from the backend device 200 to each frontend device 110, 120. The uploading of the coefficients is not necessarily done with the high-speed network, but it may be done so.

According to embodiments, the network 300 can be a switched network with side channels which connects the adjacent frontend devices along the daisy chain with each other and finally with the backend device 200. The side channels are configured to provide one or more of the following: the raw data snapshots 250 provided to the backend device 200 and stored at predetermined positions in the local memories 112, 122, the beamforming coefficients 205, program coefficients, miscellaneous configurations, command and control function/data.

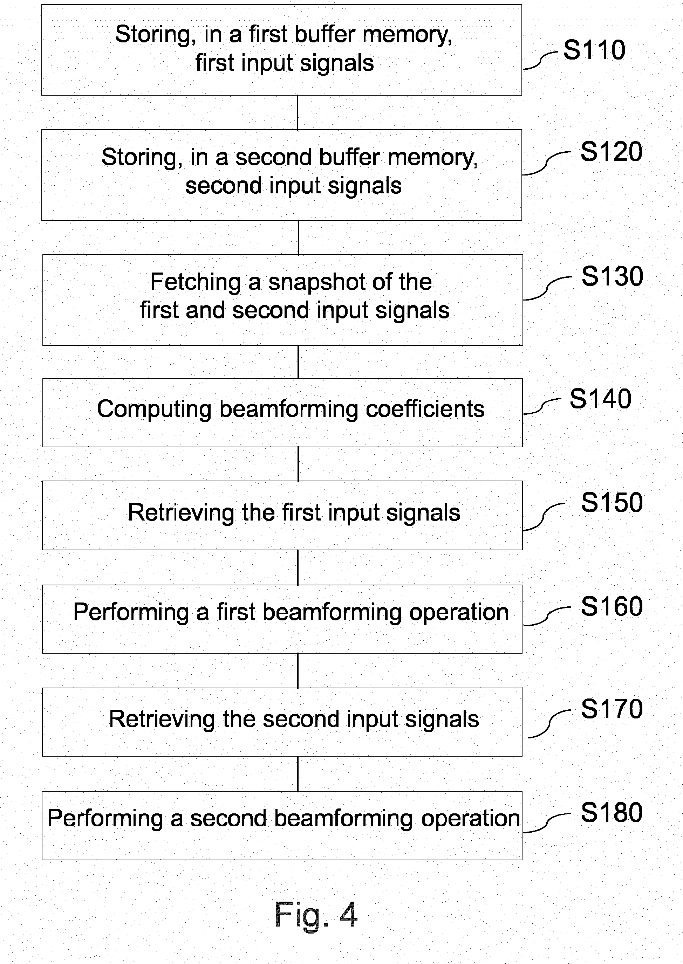

**Fig. 4** shows a schematical flow chart for a method for beamforming according to an embodiment. The method includes the following steps:
- Storing S110, in a first buffer memory 112 of first frontend device 110, first input signals 116 from the first set of antenna elements 51 at predetermined times at associated memory addresses;
- Storing S120, in a second buffer memory 122 of a second frontend device 120, second input signals 126 from the second set of antenna elements 52 at the predetermined times at associated memory addresses;
- Fetching S130, by a backend device 200, a snapshot 250 of the first input signals 116 and the second input signals 126;
- Computing S140, based on the snapshot 250, beamforming coefficients 205 for the adaptive digital beamforming;
- Retrieving S150, by the first local beamformer 114, the first input signals 116 from the first buffer memory 112;
- Performing S160, based on the computed beamforming coefficients 205, a first beamforming operation on the retrieved first input signals 116;
- Retrieving S170, by the second local beamformer 120, the second input signals 126 from the second buffer memory 120; and
- Performing S180, based on the computed beamforming coefficients 205, a second beamforming operation on the retrieved second input signals 126.

All or part of this method may be implemented in software or on a computer. Thus, the present invention relates also to a computer program product or a computer readable storage device (e.g. a hard disc or CD, DVD or another storage medium) having a program code stored thereon for performing the above-mentioned method when is executed on a computer or processor. In addition, all functions described previously in conjunction with the beamformer can be realized as further method steps and be implemented in software or software modules.

Major aspects of embodiments can be summarized as follows:
(1) The frontend devices 110, 120 start sampling the analog data provided by the analog input channels (from the antenna elements 51, 52). The raw data is then written into a memory 112, 122 and the first x samples (x = 1, 2, 3, ...) are written to a separate internal memory to be used as snapshot 250 which is provided to the backend device 200.
(2) The backend device 200 fetches the snapshots 250 from the separate internal memories with a side channel.
(3) The backend device 200 computes the adaptive beamforming coefficients 205.
(4) The backend device 200 uploads the adaptive beamforming coefficients 205, for example again using the side channels or, alternatively, using the data packet 210 provided to the frontend devices 110, 120.
(5) The frontend devices 110, 120 perform the beamforming.
(6) Steps (1) to (3) can be repeated or start again while step (5) is still running in the frontend devices 110, 120.

In Step (5) the following sub-steps can be carried out:
(a) The backend device 200 requests beam data by sending the data packet 210 to the first frontend device 110, or when multiple beamforming operations are performed in parallel, multiple packets are sent with an ascending order to the first frontend device 110 implying that the first frontend device 110 will perform the beamforming subsequently for different memory offsets corresponding to different samples.
(b) The frontend devices 110, 120 fetch data from the buffer memories 112, 122 and compute and forward the resulting beams 230.
(c) The backend device 200 receives the beam data 230 from the last frontend device 120, 150.

Embodiments provide the advantage that in case a packet loss occurs, a certain number of beam samples might be lost, but no desynchronization can occur because the offsets are indicated in each packet which includes the exact moment in time when the beamforming operation shall be carried out.

Embodiments provide the following advantages:
- The buffering (and thus delaying while computation of digital beamforming coefficients is in progress) of raw data 116, 126 in local memories 112, 122 and the fact that the memory offsets 220 are included in the packet headers allow to realize an adaptive beamforming on systolic arrays.
- The reason is that the raw samples are buffered in the local memories of the frontend devices and thus are available locally.
- Once the backend device 200 has finished the computing and uploaded the adaptive beamforming coefficients 205, it can simply trigger or initiate the beamforming of the corresponding samples by only sending the initiation data packet 210 to the first frontend device 110 in the chain of frontend devices.
- Then, the beams 230 are computed in a distributed fashion and the final result is sent to the backend device 200 by the last frontend device.

Thus, embodiments simplify the system as all frontend devices operate exactly equally and may use the same firmware or software.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

Although the invention has been illustrated and described in detail by way of preferred embodiments, the invention is not limited by the examples disclosed, and other variations can be derived from these by the person skilled in the art without leaving the scope of the invention. It is therefore clear that there is a plurality of possible variations. It is also clear that embodiments stated by way of example are only really examples that are not to be seen as limiting the scope, application possibilities or configuration of the invention in any way. In fact, the preceding description and the description of the figures enable the person skilled in the art to implement the exemplary embodiments in concrete manner, wherein, with the knowledge of the disclosed inventive concept, the person skilled in the art is able to undertake various changes, for example, with regard to the functioning or arrangement of individual elements stated in an exemplary embodiment without leaving the scope of the invention, which is defined by the claims and their legal equivalents, such as further explanations in the description.

### List of reference signs

- 51,52: sets of antenna elements
- 110, 120: frontend devices
- 111,121: packaging and memory write module (e.g. a DMA component)
- 112,122: buffer memories
- 113,123: reading module (e.g. a DMA component)
- 114, 124: (local) beamformer(s)
- 115,125: adder (adding module)
- 116,126: input signals (e.g. raw data, digital or analog)
- 118, 128: memory addresses
- 200: backend device
- 205: beam forming coefficients
- 210: data packet
- 220: memory offset
- 230: beams (generated by beamformer)
- 250: snapshot
- 300: network (e.g. daisy chain)

## Claims

1. A digital beamformer for a phased array, the phased array including a first set of antenna elements (51) and a second set of antenna elements (52), the beamformer comprising:
a first frontend device (110) including a first buffer memory (112) and a first local beamformer (114), the first buffer memory (112) being configured to store first input signals (116) from the first set of antenna elements (51) at predetermined times at associated memory addresses (118);
a second frontend device (120) including a second buffer memory (122) and a second local beamformer (124), the second buffer memory (122) being configured to store second input signals (126) from the second set of antenna elements (52) at the predetermined times at associated memory addresses (128); and
a backend device (200) configured to fetch a snapshot (250) of the first input signals (116) and the second input signals (126) and based on the snapshot (250) to compute beamforming coefficients (205) for the adaptive digital beamforming,
wherein the first local beamformer (114) is configured to retrieve the first input signals (116) from the first buffer memory (112) and to perform, based on the computed beamforming coefficients (205), a first beamforming operation on the retrieved first input signals (116), and
wherein the second local beamformer (124) is configured to retrieve the second input signals (126) from the second buffer memory (122) and to perform, based on the computed beamforming coefficients (205), a second beamforming operation on the retrieved second input signals (126).

2. The beamformer according to claim 1, wherein the snapshot (250) includes a predetermined number of samples of the first input signals (116) and of the second input signals (126) written in respective predetermined memory portions of the first buffer memory (112) and of the second buffer memory (122).

3. The beamformer according to claim 1 or claim 2,
wherein the backend device (200) is further configured to provide a data packet (210) to the first frontend device (110), wherein the data packet (210) includes a memory offset (220) indicative of one of the predetermined times, and
wherein the first local beamformer (114) is configured to start performing the beamforming operation after the data packet (210) has been received.

4. The beamformer according to claim 1 or claim 2, wherein the first frontend device (110) is configured to generate a data packet (210) including a memory offset (220) indicative of one of the predetermined times and to add results of the first beamforming operation to the data packet (210), and to provide the data packet (210) to the second frontend device (120), and
wherein the second local beamformer (124) is configured to start performing the second beamforming operation after reception of the data packet (210).

5. The beamformer according to claim 3 or claim 4,
wherein the first frontend device (110) includes a first adder (115) configured to add the results of the first beamforming operation to the data packet (210) and, thereafter, to provide the data packet (210) to the second frontend device (120), and
wherein the second frontend device (120) includes a second adder (125) configured to add results of the second beamforming operation to the provided data packet (210) and to provide the data packet (210) to the backend device (200) thereby finalizing the beamforming.

6. The beamformer according to any one of claims 3 to 5, wherein the data packet (210) includes a header with the memory offset (220) and is otherwise filled with predetermined digital values.

7. The beamformer according to any one of claims 3 to 6, wherein the backend device (200) is configured to provide the beamforming coefficients (205) as part of the data packet (210) or by sending the beamforming coefficients (205) directly to the first frontend device (210) and to the second frontend device (220) or to a storage device for downloading.

8. The beamformer according to any one of the preceding claims, wherein the first buffer memory (112) and the second buffer memory (122) are circular memory buffers, and each include a respective address generator (118, 128) and a respective write memory module (111, 121) configured to write the first and second input signals at predetermined addresses provided by the respective address generator (118, 128).

9. The beamformer according to one of the preceding claims, including a plurality of frontend devices and a network (300) connecting the plurality of frontend devices and the backend device (200) with each other, wherein the first frontend device (110) and the second frontend device (120) are two frontend devices of the plurality of frontend devices.

10. The beamformer according to claim 9, wherein the backend device (200) and the plurality of frontend devices are connected as a daisy chain by a serial data connection, and wherein each of the plurality of frontend devices is configured to forward successively, after adding respective results of the beamforming operation, the data packet (210) along the daisy chain and finally to the backend device (200).

11. The beamformer according to claim 9 or claim 10, wherein the backend device (200) is configured to fetch another snapshot of the first input signals (116) and of the second input signals (126) and based on the other snapshot to compute further beamforming coefficients (205) while the first local beamformer (114) and/or the second local beamformer (124) perform respective beamforming operations.

12. A method for digital beamforming for a phased array radar, the phased array radar including a first set of antenna elements (51) and a second set of antenna elements (52), the method including:
Storing (S110), in a first buffer memory (112) of first frontend device (110), first input signals (116) from the first set of antenna elements (51) at predetermined times at associated memory addresses (118);
Storing (S120), in a second buffer memory (122) of a second frontend device (120), second input signals (126) from the second set of antenna elements (52) at the predetermined times at associated memory addresses (128); and
Fetching (S130), by a backend device (200), a snapshot (250) of the first input signals (116) and the second input signals (126);
Computing (S140), based on the snapshot (250), beamforming coefficients (205) for the adaptive digital beamforming;
Retrieving (S150), by the first local beamformer (114), the first input signals (116) from the first buffer memory (112);
Performing (S160), based on the computed beamforming coefficients (205), a first beamforming operation on the retrieved first input signals (116);
Retrieving (S170), by the second local beamformer (124), the second input signals (126) from the second buffer memory (122); and
Performing (S180), based on the computed beamforming coefficients (205), a second beamforming operation on the retrieved second input signals (126).

13. A computer-readable medium having stored thereon a computer program comprising instructions to cause the digital beamformer of one of claims 1 to 11 to execute the steps of the method of claim 12.
